# EUROPÄISCHE PATENTANMELDUNG

(11) **EP 4 009 497 A1**
(43) Veröffentlichungstag der Anmeldung: **08.06.2022**
(21) Anmeldenummer: 21209823.0
(22) Anmeldetag: 23.11.2021
(51) Int. Cl.: H02K 1/2786, H02K 1/32, H02K 9/06, H02K 1/2787, H02K 7/14

(54) **ROTOR MIT INTEGRIERTEM LÜFTER, ELEKTROMOTOR, PUMPENVORRICHTUNG, HAUSHALTSGERÄT UND HERSTELLUNGSVERFAHREN**

(30) Priorität: 02.12.2020 DE 102020215183
(71) Anmelder: BSH Hausgeräte GmbH, 81739 München (DE)
(72) Erfinder: Kalavsky, Michal, 04023 Kosice (SK)

(57) **Zusammenfassung**

Es wird ein Rotor 10 für einen Elektromotor 100 offenbart. Der Rotor umfasst einen Ringabschnitt 11 und einen Nabenabschnitt 12, wobei der Ringabschnitt 11 ein Permanentmagnetmaterial enthält und so konfiguriert ist, dass er zumindest teilweise um zumindest einen Abschnitt eines Stators 20 des Elektromotors 100 rotiert. Der Nabenabschnitt 12 ist als Lüfter mit zwei oder mehr Flügelelementen 12a, 12b, 12c, 12d konfiguriert, die jeweils mit dem Ringabschnitt 11 verbunden sind, wobei die Flügelelemente zwei oder mehr axiale Luftkanäle P begrenzen.

Ferner werden ein Elektromotor 100 mit einem solchen Rotor 10, eine Pumpenvorrichtung 1000 und ein Haushaltsgerät offenbart, die jeweils einen solchen Elektromotor 100 umfassen, und ein Verfahren zum Herstellen des Rotors 10.

## Beschreibung

Die vorliegende Erfindung betrifft einen Rotor für einen Elektromotor, einen Elektromotor mit einem solchen Rotor, eine Pumpenvorrichtung und ein Haushaltsgerät, die jeweils einen solchen Elektromotor umfassen, und ein Verfahren zum Herstellen des Rotors.

Elektrische Haushaltsgeräte umfassen oft einen Elektromotor, der insbesondere so konfiguriert sein kann, dass er ein rotierendes Werkzeug oder ein Flügelrad einer Pumpe antreibt. Es sind verschiedene Rotortypen bekannt, die sich in den entsprechenden Elektromotoren befinden.

Eine Aufgabe der vorliegenden Erfindung besteht darin, einen verbesserten Permanentmagnetrotor für ein Haushaltsgerät und ein Verfahren zum Herstellen eines solchen Rotors bereitzustellen. Eine weitere Aufgabe der vorliegenden Erfindung besteht darin, einen verbesserten Elektromotor, eine verbesserte Pumpenvorrichtung und ein verbessertes Haushaltsgerät bereitzustellen.

Die Aufgaben werden durch einen Rotor nach Anspruch 1, einen Elektromotor nach Anspruch 7, eine Pumpenvorrichtung nach Anspruch 8, ein Haushaltsgerät nach Anspruch 9 beziehungsweise ein Verfahren nach Anspruch 10 gelöst. In den abhängigen Ansprüchen, der Beschreibung und den Figuren werden bevorzugte Ausführungsformen offenbart.

Ein Rotor gemäß der vorliegenden Erfindung ist so konfiguriert, dass er Bestandteil eines Elektromotors ist. Er umfasst einen Ringabschnitt und einen Nabenabschnitt. Der Ringabschnitt enthält ein Permanentmagnetmaterial, bei dem Rotor handelt es sich insbesondere um einen Permanentmagnetrotor. Der Ringabschnitt ist so konfiguriert, dass er zumindest teilweise (d.h. zumindest mit einem Abschnitt davon) um zumindest einen Abschnitt eines Stators des Elektromotors rotiert. Das heißt, wenn der Rotor in dem Elektromotor eingebaut ist, liegt zumindest ein Abschnitt des Rotors radial außerhalb von zumindest einem Abschnitt des Stators. Es versteht sich, dass sich der Begriff "radial" sowie die Begriffe "axial" und "Umfang" in diesem Dokument jeweils auf eine vorgesehene Rotationsachse des Rotors beziehen und das Gleiche für die jeweils damit verwandten Wörter gilt.

Der Nabenabschnitt eines Rotors gemäß der vorliegenden Erfindung ist als Lüfter konfiguriert: Er umfasst zwei oder mehr (vorzugsweise mindestens drei oder vier) Flügelelemente, die jeweils (vorzugsweise an ihren jeweils radial außenliegenden Enden) mit dem Ringabschnitt verbunden sind, wobei die Flügelelemente zwei oder mehr in axialer Richtung verlaufende Luftkanäle begrenzen.

Da die axialen Luftkanäle zwischen den Flügelelementen des Nabenabschnitts vorgesehen sind, ermöglicht die vorliegende Erfindung auf integrierte Weise in axialer Richtung einen Luftstrom durch den Rotor und den vom Rotor umgebenen Statorabschnitt. Dies ermöglicht eine bessere Kühlung von Komponenten des Elektromotors, insbesondere von Statorwicklungen, mindestens einem Statorstapel und/oder einem oder mehreren den Rotor drehbar lagernden Lagerelementen, wodurch sich die Lebensdauer des Elektromotors erhöht. So lässt sich eine Qualitätsverschlechterung bei Komponenten (wie Statorwicklungen, einer Statornutisolation, eines Lagersystems und/oder einer Schmierung davon) des Elektromotors zumindest verzögern.

Im Vergleich zu herkömmlichen Elektromotoren können insbesondere aktive Teile des Elektromotors stärker genutzt werden, ohne dass es beim Betrieb des Elektromotors zu einer Temperaturerhöhung kommt. Somit kann der Elektromotor mit geringeren Außenmaßen und/oder unter Verwendung weniger aktiver Materialien (wie Magnetmaterial, Kupfer und/oder eisenhaltiges Material) gefertigt werden, während die Leistung trotzdem erhalten bleibt.

Im Vergleich zu einem herkömmlichen Rotor mit einem einfachen, durchgängigen Nabenabschnitt ermöglichen die Luftkanäle im Nabenabschnitt zudem eine Materialeinsparung und dadurch eine Verringerung des Gewichts des Rotors.

Gemäß bevorzugten Ausführungsformen ist der Rotor in einem Haushaltsgerät wie zum Beispiel einem Haushaltsgerät mit einer Pumpenvorrichtung enthalten oder so konfiguriert, dass er in ein solches eingesetzt werden kann.

Die Flügelelemente können geradlinig oder in gekrümmter Form in radialer Richtung verlaufen. Der Rotor kann ferner eine Welle umfassen. Eine solche Welle kann drehfest an dem Nabenabschnitt angebracht (d.h. zum gemeinsamen Rotieren mit dem Nabenabschnitt verbunden) sein.

Gemäß vorteilhaften Ausführungsformen umfasst der Rotor einen monolithischen Teil, der den Ringabschnitt und den Nabenabschnitt enthält. Das heißt, der Ringabschnitt und der Nabenabschnitt des Rotors können jeweils in einen gemeinsamen monolithischen Teil integriert sein. Dadurch lässt sich eine höhere Stabilität und Lebensdauer des Rotors erzielen. Ein solcher monolithischer Teil kann insbesondere durch Spritzgießen und/oder generative Fertigung hergestellt werden.

Zumindest ein Abschnitt des Rotors, vorzugsweise der Ringabschnitt und/oder der Nabenabschnitt, kann zumindest teilweise aus einem Kunststoffmaterial hergestellt sein. Damit kann der Rotor besonders leicht sein. Der Rotor ist insbesondere vorteilhafterweise zumindest teilweise aus einem Plastomagnetmaterial hergestellt. Der Nabenabschnitt und der Ringabschnitt sind vorzugsweise beide zumindest teilweise aus dem gleichen (gemeinsamen) Kunststoffmaterial hergestellt.

Bei Ausführungsformen, bei denen der Rotor wie oben erwähnt einen monolithischen Teil mit dem Ringabschnitt und dem Nabenabschnitt umfasst, kann insbesondere ein solcher monolithischer Teil aus einem Kunststoffmaterial (Plastomagnetmaterial) hergestellt sein.

Gemäß bevorzugten Ausführungsformen weist mindestens eines der Flügelelemente mindestens einen Bereich mit dünner werdendem Seitenrand auf, in dem das Flügelelement (in axialer Richtung gemessen) zu einem Rand hin dünner wird, der den mindestens einen Flügel in Umfangsrichtung begrenzt. Ein solcher dünner werdender Seitenrand kann insbesondere angefast und/oder abgerundet sein. Das mindestens eine Flügelelement weist vorzugsweise zwei derartige Bereiche mit dünner werdendem Seitenrand auf, die einander in Umfangsrichtung gegenüberliegen. Insbesondere kann mindestens einer der Flügel in Umfangsrichtung stromlinienförmig sein.

Diese Ausführungsformen sorgen für einen verbesserten Luftstrom, der von dem als Lüfter konfigurierten Nabenabschnitt erzeugt wird, wenn sich der Rotor dreht.

Der Nabenabschnitt kann vorteilhafterweise nichtmagnetisch sein.

Der Ringabschnitt kann ungleichmäßig magnetisiert sein. Der Ringabschnitt kann insbesondere einen (vorzugsweise ringförmigen) ersten Teilabschnitt und einen (vorzugsweise ringförmigen) zweiten Teilabschnitt umfassen, wobei der Ringabschnitt in dem zweiten Teilabschnitt ein schwächeres Magnetfeld aufweisen kann als in dem ersten Teilabschnitt. Der zweite Teilabschnitt kann insbesondere nichtmagnetisch sein und/oder der Ringabschnitt (oder sogar der (gesamte) Rotor) kann nur in seinem ersten Teilabschnitt anisotrop sein.

Dadurch kann sich ein Verbrauch von Permanentmagnetmaterial in einem Herstellungsprozess für den Rotor verringern. Insbesondere lässt sich ein Aufnehmen von Permanentmagnetmaterial in einen ineffektiven Teilabschnitt des Rotors vermeiden.

Der zweite Teilabschnitt des Ringabschnitts kann insbesondere in axialer Richtung den ersten Teilbereich von dem Nabenabschnitt trennen. Das heißt, der zweite Teilbereich kann (insbesondere in axialer Richtung) zwischen dem ersten Teilbereich und dem Nabenabschnitt angeordnet sein. Eine Abmessung des ersten Teilabschnitts in axialer Richtung kann zum Beispiel geringer sein als eine Abmessung des (gesamten) Ringabschnitts in axialer Richtung. Diese Ausführungsformen sorgen für ein geringeres Auftreten (oder sogar für ein Wegfallen) von Axialkraft zwischen dem Rotor und dem Stator, insbesondere einem Statorstapel davon, wenn der Elektromotor läuft. Insbesondere lassen sich durch solche Axialkräfte entstehende Reibungsverluste reduzieren oder sogar unterbinden.

Gemäß vorteilhaften Ausführungsformen verengt sich eine radial außenliegende Fläche des Ringabschnitts zum Nabenabschnitt hin. Dadurch lässt sich für eine Herstellung des Rotors benötigtes Material einsparen, und der Rotor kann ein besonders geringes Gewicht aufweisen. Bei Ausführungsformen, die wie oben erwähnt einen ersten und einen zweiten Teilabschnitt mit unterschiedlichem Magnetfeld aufweisen, kann insbesondere der erste Teilabschnitt (jeweils in radialer Richtung gemessen) einen größeren Durchmesser aufweisen als der zweite Teilabschnitt.

Der Ringabschnitt (bei jeweiligen Ausführungsformen insbesondere dessen erster Teilabschnitt) kann in Bezug auf eine axiale Richtung vorzugsweise eine schräg verlaufende Magnetisierungsrichtung aufweisen. Ein entsprechender Winkel zwischen der Magnetisierungsrichtung und einer Parallelen zur vorgesehenen Rotationsachse des Rotors kann vorzugsweise größer als 5°, 10° oder 15° und/oder kleiner als 40°, 35° oder 30° sein. Dadurch lässt sich ein geringeres Motorrastmoment erzielen.

Ein Verfahren gemäß der vorliegenden Erfindung dient zum Herstellen eines Rotors gemäß einer Ausführungsform der vorliegenden Erfindung. Das Verfahren umfasst das Fertigen zumindest des Ringabschnitts und/oder des Nabenabschnitts des Rotors durch Spritzgießen und/oder generative Fertigung. Dadurch kann eine schnelle und trotzdem zuverlässige Herstellung gewährleistet werden.

Ein Elektromotor gemäß der vorliegenden Erfindung weist einen Stator und einen Rotor gemäß einer Ausführungsform der vorliegenden Erfindung auf. Zumindest ein Abschnitt des Stators ist so angeordnet, dass er von dem Ringabschnitt des Rotors (zumindest einem Abschnitt davon) begrenzt ist.

Eine Pumpenvorrichtung gemäß der vorliegenden Erfindung umfasst ein Flügelrad und einen Elektromotor gemäß einer Ausführungsform der vorliegenden Erfindung. Dabei ist das Flügelrad so konfiguriert, dass es von dem Elektromotor angetrieben wird. Bei der Pumpenvorrichtung kann es sich um eine Nassläufer- oder eine Trockenläuferpumpenvorrichtung handeln. Sie kann insbesondere so konfiguriert sein, dass sie Flüssigkeit (wie Wasser) oder Gas (wie Luft) pumpt.

Ein Haushaltsgerät gemäß der vorliegenden Erfindung weist einen Elektromotor gemäß einer Ausführungsform der vorliegenden Erfindung auf. Das Haushaltsgerät kann insbesondere eine Elektropumpe gemäß einer Ausführungsform der vorliegenden Erfindung umfassen. Bei dem Haushaltsgerät kann es sich zum Beispiel um eine Waschmaschine, einen Geschirrspüler, einen Wäschetrockner, eine Dunstabzugshaube oder einen Ventilator handeln.

Nachfolgend werden unter Bezugnahme auf die beiliegenden Zeichnungen bevorzugte Ausführungsformen der vorliegenden Erfindung erläutert. Es versteht sich, dass die diversen Elemente und Komponenten nur im Sinne von Beispielen abgebildet sind, nicht zwingend erforderlich sein müssen und/oder auf andere als die abgebildete Weise kombiniert werden können. Bezugszeichen für verwandte Elemente werden durchgehend verwendet und nicht für jede Figur neu definiert.

In den Figuren ist Folgendes schematisch gezeigt:
- Figur 1:: ein Rotor gemäß einem Ausführungsbeispiel der vorliegenden Erfindung in Perspektivansicht,
- Figur 2a bis 2d:: verschiedene Ansichten eines beispielhaften Rotors gemäß der vorliegenden Erfindung,
- Figur 3:: einen Querschnitt eines Elektromotors gemäß einer Ausführungsform der vorliegenden Erfindung zusammen mit einem Luftstrom,
- Figur 4:: eine Explosionsansicht von Komponenten eines Elektromotors gemäß einer Ausführungsform der vorliegenden Erfindung,
- Figur 5:: eine Pumpenbaugruppe gemäß der vorliegenden Erfindung im Querschnitt und mit einem Kühlluftstrom.

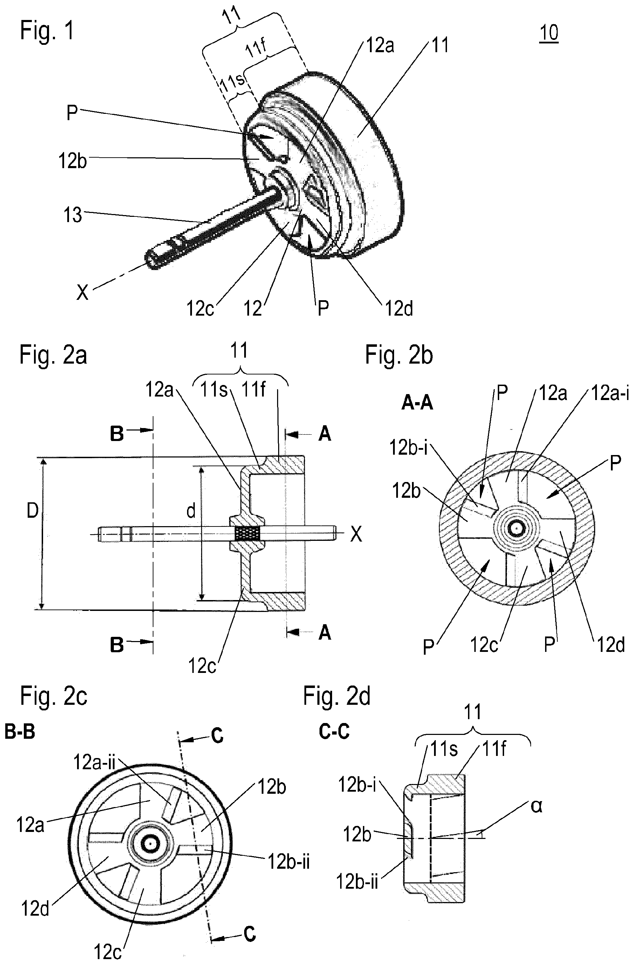

Figur 1 zeigt ein Ausführungsbeispiel für einen Rotor 10 gemäß der vorliegenden Erfindung.

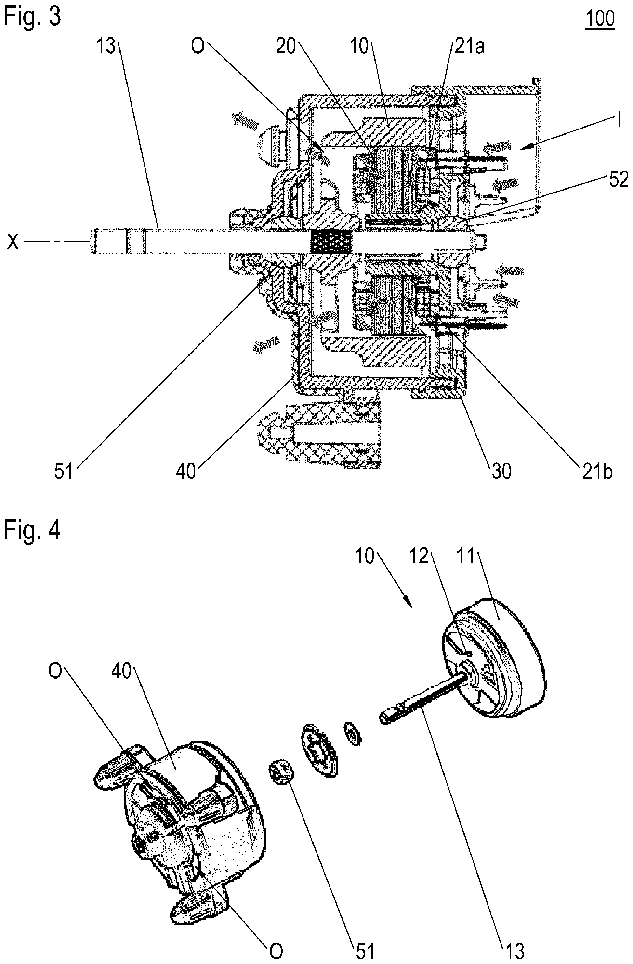

Der Rotor 10 umfasst einen Ringabschnitt 11, einen Nabenabschnitt 12 und eine Welle 13. Der Ringabschnitt 11 ist so konfiguriert, dass er zumindest teilweise (d.h. zumindest ein Abschnitt davon) um zumindest einen Abschnitt eines Stators eines Elektromotors rotiert, wie beispielsweise um einen in Figur 3 abgebildeten Stator 20. Der Rotor 10 kann sich insbesondere in einem Elektromotor befinden, den eine (Trockenläufer- oder Nassläufer-) Pumpenvorrichtung umfasst.

Bei der abgebildeten Ausführungsform sind der Ringabschnitt 11 und der Nabenabschnitt 12 in einen gemeinsamen monolithischen Teil integriert. Dadurch kann der Rotor 10 besonders stabil sein.

Wie in Figur 1 zu sehen ist, ist der Nabenabschnitt 12 als Lüfter konfiguriert: In dem abgebildeten beispielhaften Fall weist er (genau) vier Flügelelemente 12a, 12b, 12c, 12d auf, die jeweils (in Bezug auf die vorgesehene Rotationsachse X des Rotors 10) in radialer Richtung verlaufen und an ihrem jeweiligen radial außenliegenden Ende mit dem Ringabschnitt 11 verbunden sind. Zwischen jeweils zwei Flügelelementen, die in Umfangsrichtung nebeneinanderliegen, ist ein axialer Luftkanal P vorgesehen.

Dementsprechend wird im Betrieb eines Elektromotors mit dem Rotor 10 ein durch einen von dem Ringabschnitt 11 umgebenen Innenbereich und - danach - durch die Luftkanäle P strömender Luftstrom bewirkt, der dazu dient, Elemente des Elektromotors abzukühlen. Außerdem sorgen die Luftkanäle für ein geringeres Gewicht des Rotors.

Vorzugsweise ist zumindest der Ringabschnitt 11 und/oder der Nabenabschnitt 12 des Rotors 10 aus Kunststoffmaterial, insbesondere aus einem Plastomagnetmaterial hergestellt. Das Fertigen kann durch Spritzgießen und/oder generative Fertigung erfolgen.

Bei der abgebildeten Ausführungsform weist der Ringabschnitt 11 einen ersten Teilabschnitt 11f und einen zweiten Teilabschnitt 11s auf. Der zweite Teilabschnitt 11s ist in axialer Richtung (d.h. parallel zur vorgesehenen Rotationsachse X) zwischen dem Nabenabschnitt 12 und dem ersten Teilabschnitt 11f angeordnet und trennt diese somit in axialer Richtung. Somit verbindet der zweite Teilabschnitt 11s den ersten Teilabschnitt 11f (des Ringabschnitts) mit dem Nabenabschnitt 12. Bei der abgebildeten Ausführungsform ist sowohl der erste als auch der zweite Teilabschnitt ringförmig.

Zumindest der erste Teilabschnitt, der so konfiguriert ist, dass er sich zumindest teilweise um den (in Figur 1 nicht gezeigten) Stator dreht, enthält ein Permanentmagnetmaterial (in Figur 1 nicht zu sehen). Dabei ist das Magnetfeld bei dem zweiten Teilabschnitt 11s schwächer als bei dem ersten Teilabschnitt 11f. Dadurch kann Magnetmaterial eingespart werden.

Der zweite Teilabschnitt 11s kann zum Beispiel nichtmagnetisch (magnetfrei) sein, so dass nur der erste Teilabschnitt 11f des Ringabschnitts ein Magnetfeld aufweist. Der erste Teilabschnitt 11f kann insbesondere anisotrop und der zweite Teilabschnitt 11s isotrop sein.

Dadurch lässt sich im Betrieb des Elektromotors mit dem Rotor 10 eine Axialkraft zwischen dem Rotor 10 und dem Statorstapel verringern oder sogar unterbinden, so dass sich Reibungsverluste auf ein Minimum beschränken.

Wie in Figur 2a dargestellt ist (die den Rotor 10 in einem Querschnitt entlang der vorgesehenen Rotationsachse X zeigt), weist der zweite Teilabschnitt 11s einen (in Bezug auf die vorgesehene Rotationsachse X in radialer Richtung gemessenen) Durchmesser d auf, der geringer ist als ein (gleichermaßen in Bezug auf Achse X in radialer Richtung gemessener) Durchmesser D des ersten Teilabschnitts 11f. Die radial außenliegende Fläche des Ringabschnitts 11 verengt sich insbesondere zum Nabenabschnitt 12 hin.

Die Figuren 2b und 2c zeigen jeweils einen orthogonal zur Rotationsachse X verlaufenden Querschnitt, der in Figur 1a durch die Markierungen A-A beziehungsweise B-B angezeigt ist, wobei die Betrachtungsrichtung in beiden Figuren zum Nabenabschnitt 12 des Rotors 10 hin verläuft. In Figur 2d ist ein parallel zur Rotationsachse X verlaufender Querschnitt gezeigt, der (in Figur 2c) durch die Markierungen C-C angezeigt ist.

Wie in den Figuren 2b bis 2d zu sehen ist, sind jeweils zwei in Umfangsrichtung benachbarte Flügelelemente 12a, 12b, 12c, 12d durch einen jeweiligen Luftkanal P voneinander getrennt. Die Flügelelemente 12a, 12b, 12c, 12d werden an ihren Rändern zu den Luftkanälen P hin jeweils dünner.

Zur besseren Verständlichkeit der Zeichnungen sind nur die dünner werdenden Seitenränder 12a-i, 12-a-ii des Flügelelements 12a und die dünner werdenden Seitenränder 12b-i und 12b-ii des Flügelelements 12b mit Bezugszeichen versehen, denn es versteht sich, dass die Flügelelemente 12c und 12d die gleiche Form aufweisen.

Wie in den Figuren 2b bis 2d zu sehen ist, werden die Flügelelemente 12a, 12b jeweils an ihren sich in Umfangsrichtung gegenüberliegenden Rändern in entgegengesetzten Richtungen dünner. Das heißt, die dünner werdenden Seitenränder 12a-i, 12a-ii an den sich gegenüberliegenden Rändern des Flügelelements 12a weisen (parallel zur Rotationsachse X) in entgegengesetzte Richtungen, so dass die dünner werdenden Seitenränder von verschiedenen Seiten erkennbar sind. Das Gleiche gilt für die dünner werdenden Seitenränder an den sich gegenüberliegenden Rändern der anderen Flügelelemente.

In Figur 2b, wo die Betrachtungsrichtung von einem von dem Ringabschnitt 11 umgebenen Raum aus hin zum Nabenabschnitt 12 verläuft, sind tatsächlich nur die dünner werdenden Seitenränder 12a-i, 12b-i zu sehen. Im Gegensatz dazu sind in Figur 12c bei entgegengesetzter Blickrichtung die dünner werdenden Seitenränder 12a-ii, 12b-ii zu erkennen.

Wie insbesondere in Figur 2d zu sehen ist, weist das Flügelelement 12b einen Querschnitt mit einer Rotationssymmetrie der Ordnung 2 auf.

Wie ferner in Figur 2d gezeigt ist, sind die dünner werdenden Seitenränder 12b-i, 12b-ii der Flügel 12b in dem abgebildeten Ausführungsbeispiel (sowie der anderen Flügelelemente) abgerundet. Gemäß alternativen Ausführungsformen können die Ränder der Flügelelemente einen abgefasten Bereich umfassen, die dünner werdenden Seitenränder können insbesondere eben sein.

Gemäß bevorzugten Ausführungsformen weist der Ringabschnitt, insbesondere der erste Teilabschnitt 11f davon, eine Magnetisierungsrichtung auf, die in Bezug auf die vorgesehene Rotationsachse X schräg verläuft. In Figur 2d ist ein entsprechender Schräglaufwinkel α zwischen der Magnetisierungsrichtung und einer parallel zur Rotationsachse X verlaufenden Linie angegeben. Ein solcher Winkel α ist vorzugsweise größer als 5°, als 10° oder als 15° und/oder kleiner als 40°, als 35° oder als 30°. Dadurch lässt sich ein geringeres Motorrastmoment erzielen.

In Figur 3 ist der Rotor 10 in einem Elektromotor 100 nach einem Ausführungsbeispiel der vorliegenden Erfindung gezeigt, der im Querschnitt entlang der bestimmten Rotationsachse X des Rotors 10 abgebildet ist.

Außer dem Rotor 10 umfasst der Elektromotor 100 einen Stator 20 mit Statorwicklungen; im Querschnitt von Figur 3 sind die Statorwicklungen 21a, 21b zu sehen. Der Stator wird von einer ersten Gehäusekomponente 30 gehalten, die mit einer zweiten Gehäusekomponente 40 verbunden ist, welche den Ringabschnitt 11 und den Nabenabschnitt 12 des Rotors 10 sowie die Statorwicklungen begrenzt. Die Welle 13 ist mithilfe von Lagerelementen 51, 52 drehbar in der Kombination aus erster und zweiter Gehäusekomponente 30, 40 gelagert.

In der ersten Gehäusekomponente 30 sind Lufteinlässe I und in der zweiten Gehäusekomponente 40 Luftauslässe O vorgesehen. Da der Nabenabschnitt 12 des Rotors 10 gemäß der vorliegenden Erfindung als Lüfter konfiguriert ist, ermöglicht dies, wie in Figur 3 mit Pfeilen angegeben ist, einen Kühlluftstrom: Durch Lufteinlässe I in den Elektromotor 100 einströmende Luft kann somit innenliegende Komponenten des Elektromotors (wie Statorwicklungen und/oder die Lagerelemente 51, 52) kühlen. Die Luft kann darin durch diese Komponenten erwärmt werden und über die Luftauslässe O aus dem Elektromotor herausströmen.

In Figur 4 stellt eine Explosionsdarstellung dar, wie der Rotor 10 in der zweiten Gehäusekomponente 40 des in Figur 3 gezeigten Elektromotors 100 installiert ist. Dies stellt insbesondere eine Perspektivansicht insbesondere der zweiten Gehäusekomponente 40 dar.

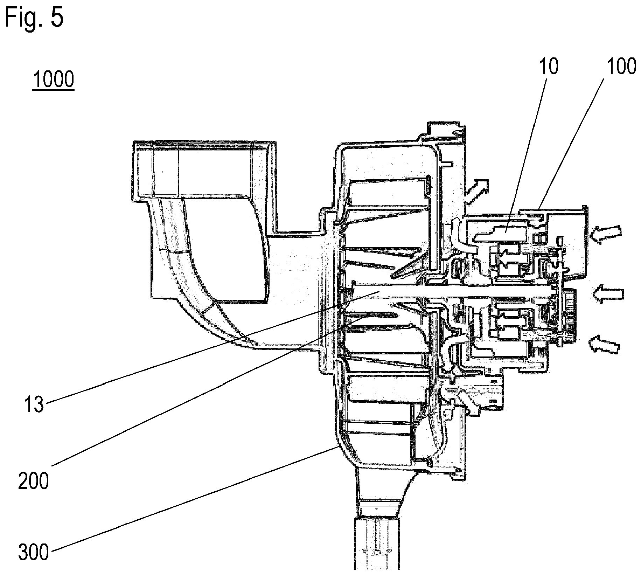

Figur 5 stellt eine Pumpe 1000 gemäß einer Ausführungsform der vorliegenden Erfindung dar. Eine solche Pumpe kann sich insbesondere in einem Haushaltsgerät wie einer Waschmaschine, einem Wäschetrockner oder einem Geschirrspüler befinden.

Die Pumpe 100 umfasst einen Elektromotor 100 gemäß der vorliegenden Erfindung. Die Welle 13 des Rotors 10 des Elektromotors 100 ist mit einem Flügelrad 200 der Pumpe 1000 verbunden und somit so konfiguriert, dass sie das Flügelrad 200 in einem Pumpengehäuse 300 antreibt.

Pfeile in Figur 5 stellen den Kühlluftstrom durch den Elektromotor 100 dar, der durch die vorliegende Erfindung ermöglicht wird.

Es wird ein Rotor 10 für einen Elektromotor 100 offenbart. Der Rotor umfasst einen Ringabschnitt 11 und einen Nabenabschnitt 12, wobei der Ringabschnitt 11 ein Permanentmagnetmaterial enthält und so konfiguriert ist, dass er zumindest teilweise um zumindest einen Abschnitt eines Stators 20 des Elektromotors 100 rotiert. Der Nabenabschnitt 12 ist als Lüfter mit zwei oder mehr Flügelelementen 12a, 12b, 12c, 12d konfiguriert, die jeweils mit dem Ringabschnitt 11 verbunden sind, wobei die Flügelelemente zwei oder mehr axiale Luftkanäle P begrenzen.

Ferner werden ein Elektromotor 100 mit einem solchen Rotor 10, eine Pumpenvorrichtung 1000 und ein Haushaltsgerät offenbart, die jeweils einen solchen Elektromotor 100 umfassen, und ein Verfahren zum Herstellen des Rotors 10.

### Bezugszeichen

- 10: Rotor
- 11: Ringabschnitt
- 11f: erster Teilabschnitt
- 11s: zweiter Teilabschnitt
- 12: Nabenabschnitt
- 12a, 12b, 12c, 12d: Flügelelement
- 12a-i, 12a-ii, 12b-i, 12b-ii: dünner werdender Seitenrand
- 13: Welle

- 20: Stator
- 21a,21b: Statorwicklung

- 30: erste Gehäusekomponente

- 40: zweite Gehäusekomponente

- 51,52: Lagerelemente

- 100: Elektromotor
- 200: Flügelrad
- 300: Pumpengehäuse

- 1000: Pumpe

- α: Schrägstellungswinkel
- d: Durchmesser des zweiten Teilabschnitts 11s
- D: Durchmesser des ersten Teilabschnitts 11f
- I: Lufteinlass
- O: Luftauslass
- P: Luftkanal
- X: vorgesehene Rotationsachse

## Patentansprüche

1. Rotor (10) für einen Elektromotor (100), wobei der Rotor einen Ringabschnitt (11) und einen Nabenabschnitt (12) umfasst,
wobei der Ringabschnitt (11) ein Permanentmagnetmaterial enthält und so konfiguriert ist, dass er zumindest teilweise um zumindest einen Abschnitt eines Stators (20) des Elektromotors (100) rotiert,
und wobei der Nabenabschnitt (12) als Lüfter mit zwei oder mehr Flügelelementen (12a, 12b, 12c, 12d) konfiguriert ist, die jeweils mit dem Ringabschnitt (11) verbunden sind, wobei die Flügelelemente zwei oder mehr axiale Luftkanäle (P) begrenzen.

2. Rotor nach Anspruch 1, wobei mindestens eines der Flügelelemente (12b) mindestens einen Bereich mit dünner werdendem Seitenrand (12a-i, 12b-i, 12b-ii) aufweist, in dem das mindestens eine Flügelelement zu einem Rand hin dünner wird, der den mindestens einen Flügel in Umfangsrichtung begrenzt.

3. Rotor nach einem der Ansprüche 1 und 2, wobei der Ringabschnitt (11) einen ersten Teilabschnitt (11f) und einen zweiten Teilabschnitt (11s) umfasst, wobei der Ringabschnitt (11) in dem zweiten Teilabschnitt (11s) ein schwächeres Magnetfeld aufweist als in dem ersten Teilabschnitt (11f).

4. Rotor nach Anspruch 3, wobei der zweite Teilabschnitt (11s) den ersten Teilabschnitt (11f) in axialer Richtung von dem Nabenabschnitt (12) trennt.

5. Rotor nach einem der vorhergehenden Ansprüche, wobei eine radial außenliegende Fläche des Ringabschnitts (11) zum Nabenabschnitt (12) hin enger wird.

6. Rotor nach einem der vorhergehenden Ansprüche, wobei zumindest der Ringabschnitt (11) und/oder der Nabenabschnitt (12) des Rotors (10) aus einem Kunststoffmaterial hergestellt ist.

7. Elektromotor (100) mit einem Rotor (10) nach einem der vorhergehenden Ansprüche und einem Stator (20).

8. Pumpenvorrichtung (1000) mit einem Flügelrad (200) und einem Elektromotor (100) nach Anspruch 7.

9. Haushaltsgerät mit einem Elektromotor (100) nach Anspruch 7 und/oder einer Pumpenvorrichtung (1000) nach Anspruch 8.

10. Verfahren zum Herstellen eines Rotors (10) nach einem der Ansprüche 1 bis 6, das das Fertigen zumindest des Ringabschnitts (11) und/oder des Nabenabschnitts (12) durch Spritzgießen und/oder generative Fertigung umfasst.
